# NEUE EUROPÄISCHE PATENTSCHRIFT

(11) **EP 1 306 603 B2**
(45) Veröffentlichungstag und Bekanntmachung des Hinweises auf die Entscheidung über den Einspruch: **29.06.2011**
(45) Hinweis auf die Patenterteilung: 02.03.2005
(21) Anmeldenummer: 02021518.2
(22) Anmeldetag: 26.09.2002
(51) Int. Cl.: F16P 3/14

(54) **Verfahren und Vorrichtung zum Steuern einer sicherheitsrelevanten Funktion einer Maschine**
Process and device for controlling a safety-relevant function of a machine
Procédé et dispositif de commande d'une fonction relative à la sécurité d'une machine

(30) Priorität: 24.10.2001 DE 10152543
(43) Veröffentlichungstag der Anmeldung: 02.05.2003
(73) Patentinhaber: SICK AG, 79183 Waldkirch (DE)
(72) Erfinder: Braune, Ingolf, 79194 Gundelfingen (DE)
(74) Vertreter: Ludewigt, Christoph

(56) Entgegenhaltungen:
- EP-A- 0 179 252
- WO-A-00/67932
- WO-A-97/25568
- DE-A- 3 700 009
- DE-A- 4 417 128
- DE-A- 10 000 287
- DE-C1- 4 405 376
- DE-C1- 19 601 661
- DE-U1- 29 920 715
- US-A- 5 280 622

## Beschreibung

Die Erfindung betrifft Verfahren zum Steuern wenigstens einer sicherheitsrelevanten Funktion einer Maschine, bei dem ein Überwachungsbereich von wenigstens einem Sensor überwacht wird und eine Position eines Objektes erkannt wird und der Überwachungsbereich eine einen Gefahrenbereich abgrenzende Sicherheitsgrenze umfasst, die einen Sicherheitsabstand zu einer Gefahrstelle der Maschine definiert, und ein Eindringen in den Gefahrenbereich die sicherheitsrelevante Funktion auslöst. Die Erfindung betrifft ferner eine Vorrichtung zur Durchführung der Verfahren.

Um Bedienpersonen von Maschinen, die ein Gefahrpotenzial bergen, wie beispielsweise Pressen, insbesondere Gesenkbiegepressen, Roboter oder dergleichen, zu schützen, sind verschiedene Sicherheitseinrichtungen bekannt.

So wird beispielsweise in einfachster Weise ein Schutz dadurch bereitgestellt, dass ein Zutritt zu oder ein Eingriff in einen Gefahrenbereich mechanisch, beispielsweise durch Gitter oder Sperrzäune, abgesichert ist. Eine mechanische Absicherung erschwert jedoch den Zugang zur Maschine auch während eines Maschinenstillstandes, so dass heutzutage bevorzugt optoelektronische Schutzeinrichtungen eingesetzt werden.

Hierbei kann es sich um ein Lichtgitter handeln, das eine optische Zugangssicherung bildet, so dass beim Durchtritt durch das Lichtgitter eine sicherheitsrelevante Funktion der Maschine, beispielsweise ein Anhalten der Maschine, ausgelöst wird.

Weitere optoelektronische Schutzeinrichtungen sind aus der WO 97/25568 und der WO 00/67932 bekannt, die ein Verfahren und eine Vorrichtung der eingangs genannten Art zeigen. Zum Fingerschutz an Gesenkbiegepressen werden dort einzelne Lichtschranken unmittelbar in der Nähe des Biegewerkzeugs angeordnet, so dass im Prinzip ein Zugang zur Presse gewährleistet ist und lediglich der gefährliche Bereich in unmittelbarer Nähe der Presswerkzeuge durch die Lichtschranken geschützt ist.

Allen diesen optoelektronischen Schutzsystemen ist gemeinsam, dass die Grenze zwischen dem abzusichernden Gefahrenbereich und dem gefahrlosen Bereich durch einen Mindestabstand zur gefahrbringenden Bewegung der Maschine fest definiert ist und bei Überschreiten dieser Grenze die sicherheitsrelevante Funktion, was zumeist ein Anhalten der Maschine bedeutet, ausgelöst wird. Da die Maschine eine gewisse Nachlaufzeit bzw. Nachlaufweg hat und die Geschwindigkeit des Objektes, das in den Gefahrenbereich eindringt, unbekannt ist, müssen die Schutzeinrichtungen (z.B. Lichtschranken und Lichtgitter) einen ausreichenden Abstand zur eigentlichen Gefahrenstelle haben. Es muss beispielsweise sichergestellt sein, dass auch bei einer sehr schnellen Bewegung, beispielsweise bei einem Sturz der Bedienperson, die Maschine noch rechtzeitig zum Stillstand kommt, bevor die Person in irgendeiner Weise mit dem Gefahrenbereich der Maschine in Berührung kommen könnte. Dabei kann von der Sicherheitseinrichtung nicht zwischen langsamen und vorsichtigen Bewegungen der Bedienperson und unvorsichtigen, unter Umständen schnellen Bewegungen, die ein höheres Unfallpotenzial haben, unterschieden werden. Aus Sicherheitsgründen ist dann immer die sicherheitsrelevante Funktion ausgelöst.

Ausgehend von diesem Stand der Technik ist es Aufgabe der Erfindung, verbesserte Verfahren und Vorrichtungen bereitzustellen, mit der die Sicherheit einer Bedienperson einer Maschine weiterhin gewährleistet ist und die in verbesserter Weise situationsabhängig die sicherheitsrelevante Funktion auslösen.

Diese Aufgabe wird durch Verfahren und Vorrichtungen gemäß den Ansprüchen 1, 3, 7 und 8 gelöst.

In einer ersten Lösung wird ein zu überwachender Bereich von wenigstens einem orts- und zeitauflösenden Sensor überwacht, mit dem die Position, die Bewegungsrichtung und/oder die Bewegungsgeschwindigkeit eines Objektes, beispielsweise einer Bedienperson oder einzelner Gliedmaßen der Bedienperson, erkannt werden. Des Weiteren ist in dem Überwachungsbereich in an sich bekannter Weise eine Sicherheitsgrenze definiert, die einen Gefahrenbereich abgrenzt und einen Sicherheitsabstand zur gefahrbringenden Bewegung der Maschine als Mindestabstand festlegt. Bei Eindringen in den Gefahrenbereich durch die Bedienperson oder einzelnen Gliedmaßen der Bedienperson wird die sicherheitsrelevante Funktion ausgelöst, wobei erfindungsgemäß die Lage der Sicherheitsgrenze, also der Sicherheitsabstand zur gefahrbringenden Bewegung der Maschine, in Abhängigkeit von der Position, der Bewegungsrichtung und/oder der Bewegungsgeschwindigkeit des überwachten Objektes variabel festlegbar ist.

Die Sicherheitsgrenze und damit die Größe des Gefahrenbereichs ist nicht mehr starr festgelegt, sondern wird entsprechend der Position der Bedienperson im Raum und der Bewegung dieser Person angepasst. Durch die situationsbedingte Anpassung der Sicherheitsgrenze kann der Überwachungsbereich, der in der Regel einen Zugangsbereich zur Maschine umfasst, wesentlich besser ausgenutzt werden, da nicht jede Bewegung, auch wenn sie nahe an der Maschine ausgeführt wird, zu einem Auslösen der sicherheitsrelevanten Funktion führt. So kann eine langsame Annäherung an die Gefahrenzone lediglich eine langsame Abbremsung der gefahrbringenden Bewegung der Maschine ermöglichen. Ein vollständiges Anhalten muss nicht unbedingt notwendig sein. Eine schnelle Annäherung kann in bekannterweise einen Nothalt der Maschine auslösen. Eine Bewegung parallel zur Gefahrenstelle oder weg von der Gefahrenstelle kann ein Wiederanlaufen der Maschine bewirken oder zumindest die sicherheitsrelevante Funktion nicht auslösen.

Zusätzlich kann die sicherheitsrelevante Funktion verschiedene Systemreaktionen enthalten. Es ist denkbar, dass bei einer Bewegung in Richtung auf die Gefahrenstelle, die sich in einer größeren Entfernung von der Gefahrenstelle abspielt, lediglich eine optische und/oder akustische Warnung erzeugt wird und bei weiterer Annäherung lediglich ein Abbremsen der gefahrbringenden Bewegung erfolgt, wobei das Abbremsen bei weiterer Annäherung zu einem kompletten Stopp der Maschine führen kann.

Insgesamt kann durch das erfindungsgemäße Verfahren die Maschinenlaufzeit erhöht werden, da mit dem erfindungsgemäßen Verfahren lediglich die tatsächlich gefahrbringenden Situationen erkannt werden können und nur diese Situationen einen Stopp der Maschine bewirken, wo hingegen weniger gefahrbringende Situationen lediglich die Maschinenbewegung verlangsamen können und nicht unbedingt einen Notstopp verursachen müssen.

Die Aufgabe wird auch gelöst durch ein weiteres Verfahren, bei dem an Stelle einer scharf definierten Sicherheitsgrenze ein Sicherheitsbereich mit einer endlichen Ausdehnung vorgesehen ist und wobei die Ausdehnung des Sicherheitsbereichs abhängig von der Position, der Bewegungsrichtung und/oder Bewegungsgeschwindigkeit des Objektes in dem Überwachungsbereich festgelegt wird. Lediglich ein vollständiges Überschreiten des gesamten Sicherheitsbereichs löst die sicherheitsrelevante Funktion aus. Ein Eintritt in den Sicherheitsbereich kann eine optische und/oder akustische Warnung auslösen. Damit ist in ähnlicher Weise, wie in der ersten Lösung, der Sicherheitsbereich situationsbedingt mit den gleichen Vorteilen anpassbar.

Es ist auch denkbar, beide Lösungen zu kombinieren, so dass ein in seiner Ausdehnung situationsbedingt anpassbarer Sicherheitsbereich geschaffen ist, dessen Lage im Überwachungsbereich zusätzlich situationsbedingt verändert werden kann.

Vorteilhafterweise ist eine Geschwindigkeit, mit der die Lage der Sicherheitsgrenze bzw. des Sicherheitsbereichs verschoben wird, abhängig von der Position, der Bewegungsrichtung und/oder Bewegungsgeschwindigkeit des Objektes im Überwachungsbereich. So kann beispielsweise bei einer langsamen Bewegung des Objektes in Richtung der Gefahrenstelle, die Sicherheitsgrenze langsam vor dem Objekt in Richtung auf die Gefahrenstelle hergeschoben werden und erst bei extremer Annäherung nicht weiter verschoben werden, so dass ein weiteres Bewegen des Objektes auf die Gefahrenstelle zu, dann die sicherheitsrelevante Funktion auslösen würde.

In Weiterbildung der Erfindung kann das Objekt im Überwachungsbereich klassifiziert werden. Dadurch kann zwischen einer Bedienperson, zu deren Schutz die Sicherheitsgrenze festzulegen ist und anderen nicht gefährdeten Objekten, für die keine Sicherheitsgrenze festzulegen ist, unterschieden werden. Ein nicht gefährdetes Objekt könnte beispielsweise ein Materialtransportwagen sein.

Die sicherheitsrelevante Funktion der Maschine wird dann in Abhängigkeit von der Klasse des Objektes gesteuert.

In Weiterbildung der Erfindung wird in vorteilhafter Weise die sicherheitsrelevante Funktion der Maschine, der Position, der Bewegungsrichtung und/oder der Bewegungsgeschwindigkeit des Objekts angepasst. So kann beispielsweise bei langsamer Annäherung an den Gefahrenbereich lediglich ein Warnton erzeugt werden, wo hingegen bei einer schnellen Annäherung an den Gefahrenbereich der Warnton verstärkt oder die Maschine sogar vollständig in einen sicheren Zustand übergehen kann.

Die Aufgabe der Erfindung wird auch durch den genannten Verfahren entsprechende Vorrichtungen gelöst.

In einer ersten Alternative weist eine erfindungsgemäße Vorrichtung zum Steuern der sicherheitsrelevanten Funktion einen Überwachungsbereich auf, in dem ein Objekt von wenigstens einem orts- und zeitauflösenden Sensor überwachbar ist. Mit einer Auswerteeinheit sind aus den Sensorsignalen Position, Bewegungsrichtung und/oder Bewegungsgeschwindigkeit des Objektes im Überwachungsbereich bestimmbar. Des Weiteren weist die Vorrichtung Mittel zum Festlegen der Sicherheitsgrenze auf, mit der die Lage der Sicherheitsgrenze in dem Überwachungsbereich situationsabhängig festlegbar ist. Zum Auslösen der sicherheitsrelevanten Funktion sind entsprechende Signal- und/oder Schaltmittel vorgesehen.

Die dem alternativen Verfahren entsprechende Vorrichtung unterscheidet sich lediglich dadurch, dass die Mittel zum Festlegen der Sicherheitsgrenze gleichzeitig auch die Ausdehnung des Sicherheitsbereichs situationsabhängig festlegen können. Bei diesen Mitteln zum Festlegen der Sicherheitsgrenze bzw. zum Festlegen der Ausdehnung des Sicherheitsbereichs kann es sich um eine entsprechend programmierbare Schaltung der Auswerteeinheit handeln.

In Weiterbildung der Erfindung weisen die Vorrichtungen Objektklassifizierungsmittel zum Klassifizieren der Objekte auf, so dass die sicherheitsrelevante Funktion der Maschine in Abhängigkeit von der Klasse des Objektes steuerbar ist. Die Objektklassifizierungsmittel können ebenfalls in die Auswerteeinheit schaltungs- und/oder programmtechnisch integriert sein.

Im Folgenden wird die Erfindung an Hand von Ausführungsbeispielen unter Bezugnahme auf die Zeichnung im Einzelnen erläutert. In der Zeichnung zeigen:
- Figur 1: eine schematische Darstellung einer erfindungsgemäßen Vorrichtung an einer Biegepresse;
- Figuren 2 und 3: die in Figur 1 dargestellt Situation in einer Draufsicht;
- Figur 4: eine schematische Darstellung einer Arbeitssituation, an der ein Industrieroboter und eine Person beteiligt sind.

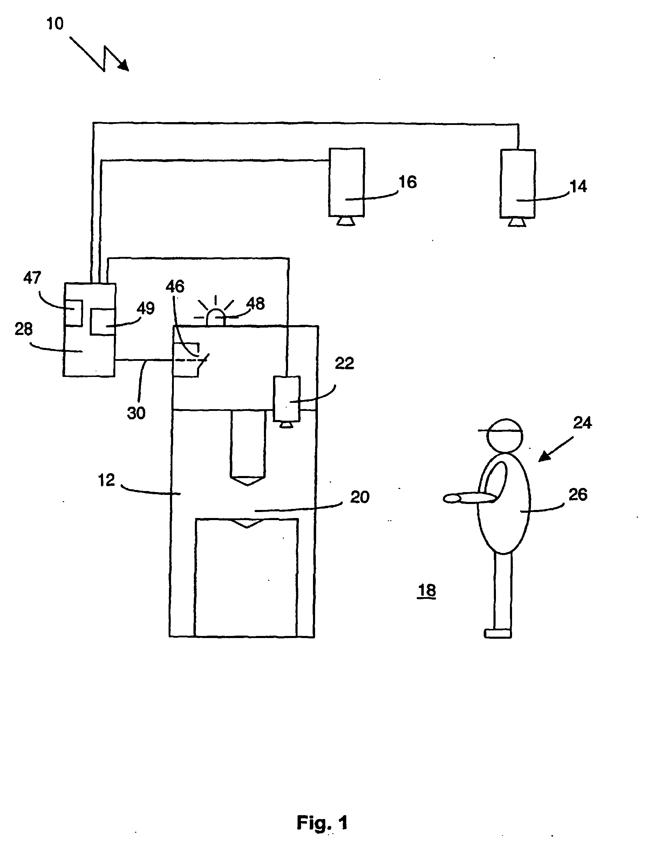

Eine erfindungsgemäße Vorrichtung 10 zum Steuern wenigstens einer sicherheitsrelevanten Funktion einer Maschine 12, die in den Figuren 1 bis 3 als eine Gesenkbiegepresse dargestellt ist, weist wenigstens einen orts- und zeitauflösenden Sensor 14 auf. Der Sensor 14 kann eine Kamera sein oder ein beliebiger anderer orts- und zeitauflösender Sensor, wie beispielsweise ein Laserscanner, wie er von der Anmelderin unter der Bezeichnung "PLS" vertrieben wird. Bei Einsatz von Kameras als Sensoren können zwei Kameras 14 und 16 vorgesehen sein, um eine dreidimensionale Erfassung eines Überwachungsbereichs 18 zu ermöglichen. An speziellen Gefahrenstellen, wie beispielsweise im Pressbereich 20 der Maschine 12, könnte wenigstens ein weiterer Sensor 22 angeordnet sein.

Im Überwachungsbereich 18 befindet sich ein Objekt 24, das in dem dargestellten Beispiel eine Bedienperson 26 ist. Die Sensoren 14, 16, 22 sind über Signalleitungen mit einer Auswerteeinheit 28 verbunden, in der die Sensorsignale ausgewertet werden können. Die Auswerteeinheit 28 ist über eine geeignete Verbindung 30 mit der Maschine 12 verbunden, um das Auslösen mindestens einer sicherheitsrelevanten Funktion steuern zu können. Die sicherheitsrelevante Funktion kann ein Notstopp der Maschine und/oder nur ein akustisches und/oder optisches Warnsignal sein. Dazu weist die Maschine 12 oder die Vorrichtung 10 Signal- und/oder Schaltmittel auf, die beispielsweise ein in Fig. 1 schematisch dargestellter Aus-Schalter 46 und/oder eine Warnleuchte 48 sein können.

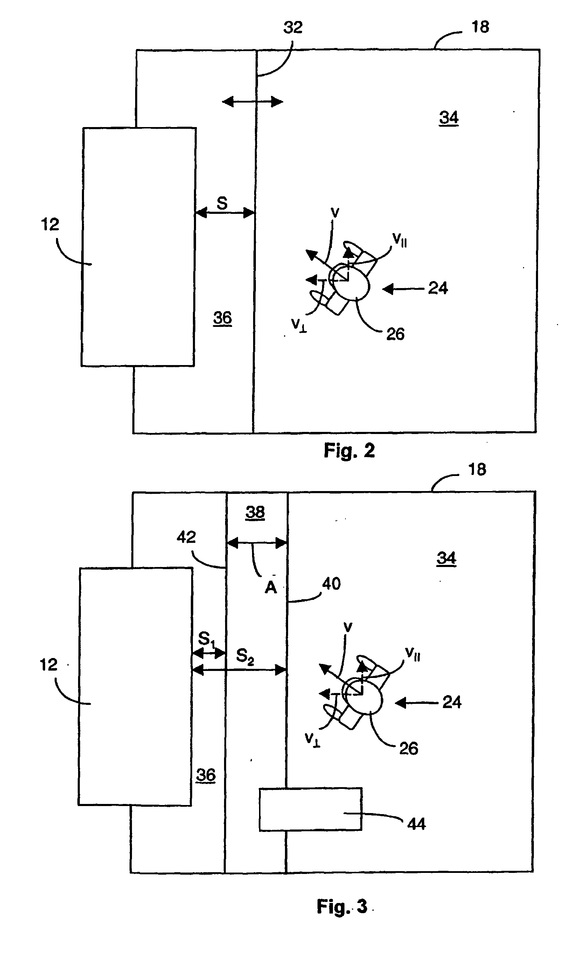

Weitere Merkmale der erfindungsgemäßen Vorrichtung und die erfindungsgemäßen Verfahren, die mit der Vorrichtung durchführbar sind, sollen im Weiteren an Hand der folgenden Funktionsbeschreibung unter Bezugnahme auf die Figuren 2 und 3 erläutert werden.

In den Figuren 2 und 3 ist der Arbeitsbereich aus Figur 1, bestehend aus Maschine 12 und Überwachungsbereich 18, in einer Draufsicht dargestellt. Die erfindungsgemäße Vorrichtung 10 mit den Sensoren 14 und 16 und der Auswerteeinheit 28 ist in dieser Darstellung nicht erkennbar. Die Figuren 2 und 3 zeigen somit ein Bild, wie es der Sensor 14 (bzw. 16) "sieht". Der Sensor 14 (bzw. 16) ist in der Lage, den gesamten Überwachungsbereich 18 zu erfassen, in dem sich auch die Maschine 12 und die Person 26, befinden. Der Sensor 14 und die Auswerteeinheit 28 sind mit einer Bilderkennung ausgebildet, um die Person 26 als ein zu schützendes Objekt erkennen zu können. Wie eine solche Objekterkennung im Einzelnen funktionieren kann ist aus dem Stand der Technik, wie es beispielsweise die DE 44 17 128 A1 zeigt, bekannt.

Der Überwachungsbereich 18 ist durch eine Sicherheitsgrenze 32 in einen ungefährlichen Bereich 34 und einen durch die Sicherheitsgrenze 32 abgesicherten Gefahrenbereich 36 aufgeteilt. Wenn die Person 26 die Sicherheitsgrenze 32 überschreitet oder beispielsweise mit dem Arm in den Gefahrenbereich 36 hineinreicht, wird über die Auswerteeinheit 28 eine sicherheitsrelevante Funktion, beispielsweise ein Notstopp der Maschine 12, über die Signal- und/oder Schaltmittel 46 oder 48 ausgelöst.

Die Sicherheitsgrenze 32 ist keine physikalisch erkennbare Grenze, sondern wird über entsprechende Mittel 47 in der Auswerteeinheit 28, beispielsweise softwaremäßig, festgelegt. Die Mittel 47 zum Festlegen der Sicherheitsgrenze können in einer programmierbaren Schaltung bestehen. Die Sicherheitsgrenze 32 hat einen Sicherheitsabstand S zur Maschine 12 und definiert die Größe des Gefahrenbereichs 36. Erfindungsgemäß ist dieser Sicherheitsabstand S, also die Lage der Sicherheitsgrenze 32, über die Mittel 47 variabel festlegbar in Abhängigkeit von der Position, der Bewegungsrichtung und/oder der Bewegungsgeschwindigkeit v der Person 26.

Die Position, Bewegungsrichtung und/oder Bewegungsgeschwindigkeit v der Person 26, kann über die Sensoren 14 und 16 und die Auswerteeinheit 28 in an sich bekannter Weise (siehe z.B. DE 44 17 128 A1) bestimmt werden. Die Bewegungsgeschwindigkeit v der Person 26, setzt sich zusammen aus einer Komponente v_{II} parallel zur Maschine 12 und einer Komponente v_{⊥} senkrecht zur Maschine 12. Eine Bewegung mit einer ausschließlichen Komponente v_{II} parallel zur Maschine kann keine Gefahren bewirken. Unter sicherheitsrelevanten Aspekten ist lediglich die Komponente v_{⊥}, also die effektive Annäherungsgeschwindigkeit, wichtig. Ist v_{⊥} groß, so sollte der Sicherheitsabstand S auch groß sein. Ist v_{⊥} jedoch klein, d. h. die Person 26 bewegt sich nur langsam auf die Maschine 12 zu, kann die Sicherheitsgrenze 32 näher an die Maschine 12 gelegt werden. Bevorzugt ist die Geschwindigkeit, mit der die Lage der Sicherheitsgrenze verschoben wird, einerseits abhängig von der Position der Person 26 und andererseits von der Geschwindigkeitskomponente v_{⊥} ist.

An Hand der Darstellung in Figur 3 soll eine weitere Ausführungsform der Erfindung erläutert werden. Im Unterschied zu dem vorhergehenden Ausführungsbeispiel ist jetzt nicht eine scharfe Sicherheitsgrenze vorgesehen, sondern ein Sicherheitsbereich 38 mit einer Ausdehnung A in Richtung senkrecht zur Maschine 12. Auf der einen Seite des Sicherheitsbereichs 38 befindet sich der ungefährliche Bereich 34 des Überwachungsbereichs 18 und jenseits des Sicherheitsbereichs 38 befindet sich der Gefahrenbereich 36, so dass bei Eindringen in den Gefahrenbereich 36 ein Übergang der Maschine in einen sicheren Zustand, beispielsweise in eine langsame Schließbewegung, über die Schaltmittel 46 veranlasst wird.

Tritt die Person 26 lediglich in den Sicherheitsbereich 38 ein, also überschreitet sie lediglich die gemäß Fig. 3 rechte Grenze 40 des Sicherheitsbereichs 38, kann über die Signalmittel 48 beispielsweise ein akustisches und/oder optisches Warnsignal abgegeben werden, das bei Annäherung an die linke Grenze 42 des Sicherheitsbereichs 38 stärker werden kann. Die sicherheitsrelevante Funktion, die im Falle der Presse eine langsame Schließbewegung sein kann, ist damit von der Position, der Bewegungsrichtung und/oder der Bewegungsgeschwindigkeit v der Person 26 abhängig. Die sichere langsame Bewegung kann beendet werden, wenn die Person 26 sich zwar noch innerhalb des Sicherheitsbereichs 38 bewegt, jedoch sich von der Maschine 12 wegbewegt, also den Abstand zur Maschine 12 vergrößert.

Abstände S₁ und S₂ der linken bzw. rechten Grenze 42, 40 des Sicherheitsbereichs 38 von der Maschine 12 können von dem Mittel 47 variabel festgelegt werden. Sie werden bevorzugt in Abhängigkeit der Position, der Bewegungsrichtung und/oder der Bewegungsgeschwindigkeit v der Person 26 festgelegt, so dass einerseits die Ausdehnung A des Sicherheitsbereichs 38 situationsbedingt anpassbar ist und anderseits auch die Lage des Sicherheitsbereichs 38, also der Abstand zur Maschine 12, situationsbedingt anpassbar ist.

Des Weiteren ist in Figur 3 ein Objekt 44 dargestellt, das beispielsweise ein Materialbeförderungswagen sein könnte. Wenn das Objekt 44 in den Sicherheitsbereich 38 oder gar in den Gefahrenbereich 34 eindringt, muss die sicherheitsrelevante Funktion nicht ausgelöst werden, denn von dem Objekt 44 kann keine Gefahr ausgehen, da der Materialbeförderungswagen 44 beispielsweise niemals in den Pressbereich 20 der Maschine 12 eindringen kann.

Damit diese Funktion, also ein Nichtauslösen der sicherheitsrelevante Funktion realisierbar ist, weist die erfindungsgemäße Vorrichtung 10 Objektklassifizierungsmittel 49 auf, die aus einer geeigneten Soft- und Hardware, die in der Auswerteeinheit 28 integriert ist, bestehen könnten. Durch die Objektklassifizierungsmittel 49 werden die erkannten Objekte 24 und 44 in Klassen eingeteilt, so dass die sicherheitsrelevanten Funktionen, wie Warnsignale oder Notstopps, in Abhängigkeit von der Klasse des in den Sicherheitsbereich 38 bzw. den Gefahrbereich 36 eindringende Objekte, gesteuert werden können. Objekte wie der Materialbeförderungswagen 44 werden zu diesem Zweck in eine Klasse von ungefährdeten Objekten eingruppiert, wohingegen durch die erfindungsgemäße Vorrichtung erkannte Personen 26 in eine Klasse von gefährdeten Objekten eingruppiert werden, für die die Sicherheitsgrenze 32 bzw. der Sicherheitsbereich 38 festgelegt werden müssen.

Insgesamt wird durch die Erfindung die Maschinenlaufzeit erhöht und die Produktionsfläche effektiver genutzt, da einerseits die Ausdehnung des abgesicherten Gefahrenbereichs 36 situationsbedingt anpassbar ist und nicht jede Bewegung, die von einer Person oder einem anderen Objekt in der Nähe der Maschine ausgeführt wird, einen Notstopp der Maschine bewirken muss und andererseits nicht jedes Eindringen eines Objektes in den Gefahrenbereich 36 einen Notstopp bewirkt.

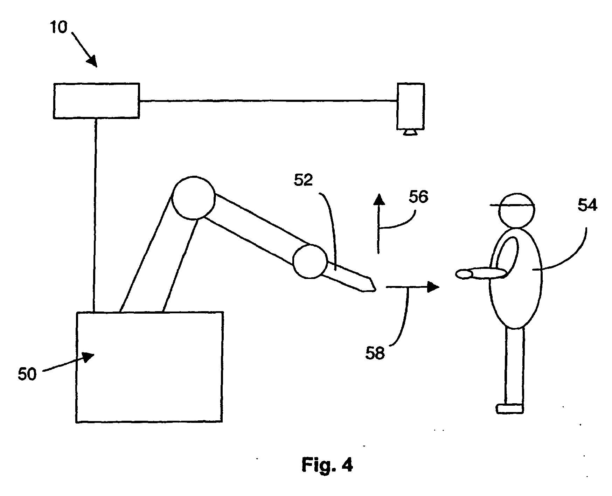

Die Erfindung ist an den verschiedensten Arten von Maschinen einsetzbar. Beispielsweise kann es sich bei der Maschine um einen Industrieroboter 50, wie er in Figur 4 schematisch dargestellt ist, handeln. Mit der erfindungsgemäßen Vorrichtung kann jetzt ein Schwenkbereich eines Roboterarms 52, die Position des Roboterarms und die Bewegungsrichtung 56, 58 und Bewegungsgeschwindigkeit des Roboterarms 52 erfasst werden. Gleichzeitig kann die Position, die Bewegungsrichtung und Bewegungsgeschwindigkeit einer im Bereich des Roboters 50 arbeitenden Person 54 erkannt werden. Mit der erfindungsgemäßen Vorrichtung 10 kann die Tätigkeit des Roboters in sicherheitsrelevanten Aspekten gesteuert werden, so dass dadurch sichergestellt ist, dass die sich Roboter 50 und Person 54 sich nie treffen und die in der Nähe des Roboterarms 52 befindende Person 54 niemals verletzt wird. Dabei muss der Roboter 50 nicht großräumig durch eine Sperrzone gesichert sein, sondern über die erfindungsgemäße Vorrichtung 10 kann der Schutzbereich um den Roboterarm 52 herum situationsangepasst variabel festgelegt werden und mit dem Roboterarm 52 "mitwandern". Damit ist ein verbessertes Arbeiten im Bereich eines Industrieroboters oder sogar eine gefahrlose Zusammenarbeit zwischen dem Roboter 50 und der Person 54 möglich.

An diesem Beispiel wird deutlich, dass auch die Form der Sicherheitsgrenze bzw. des Sicherheitsbereichs den Maschinen, wie Gesenkbiegepresse oder Industrieroboter, angepasst ausgeführt sein kann.

## Patentansprüche

1. Verfahren zum Steuern wenigstens einer sicherheitsrelevanten Funktion einer Maschine (12), bei dem ein Überwachungsbereich (18) von wenigstens einem orts- und zeitauflösenden Sensor (14, 16, 22) überwacht wird und eine Position, eine Bewegungsrichtung und/oder eine Bewegungsgeschwindigkeit (v) eines Objektes (24, 26) erkannt werden und der Überwachungsbereich (18) eine einen Gefahrenbereich (36) abgrenzende Sicherheitsgrenze (32) umfasst, die einen Sicherheitsabstand (S) zu einer Gefahrstelle der Maschine (12) definiert, und ein Eindringen in den Gefahrenbereich (36) die sicherheitsrelevante Funktion auslöst und die Lage der Sicherheitsgrenze (32) in Abhängigkeit von sowohl der Position als auch, der Bewegungsrichtung und/oder Bewegungsgeschwindigkeit (v) der Objektes variabel festlegbar ist.

2. Verfahren nach Anspruch 1, **dadurch gekennzeichnet, dass** eine Geschwindigkeit, mit der die Lage der Sicherheitsgrenze (32) verschoben wird, abhängig von der Position, der Bewegungsrichtung und/oder der Bewegungsgeschwindigkeit (v) des Objektes (24, 26) ist.

3. Verfahren zum Steuern wenigstens einer sicherheitsrelevanten Funktion einer Maschine (12), insbesondere nach einem der vorhergehenden Ansprüche, bei dem ein Überwachungsbereich (18) von wenigstens einem orts- und zeitauflösenden Sensor (14, 16, 22) überwacht wird und eine Position, eine Bewegungsrichtung und/oder eine Bewegungsgeschwindigkeit (v) eines Objektes (24, 26) erkannt werden und der Überwachungsbereich (18) einen einen Gefahrenbereich (36) abgrenzenden Sicherheitsbereich (38) umfasst und ein Eindringen in den Gefahrenbereich (36) die sicherheitsrelevante Funktion auslöst und eine Ausdehnung (A) des Sicherheitsbereichs (38) in Abhängigkeit von sowohl der Position als auch, der Bewegungsrichtung und/oder Bewegungsgeschwindigkeit (v) des Objektes (24, 26) variabel festgelegt wird.

4. Verfahren nach einem der vorhergehenden Ansprüche, **dadurch gekennzeichnet, dass** das Objekt (24, 26, 44) mittels eines Objektklassifizierungsmittels (46) klassifiziert wird.

5. Verfahren nach Anspruch 4, **dadurch gekennzeichnet, dass** die sicherheitsrelevante Funktion der Maschine abhängig von der Klasse des Objektes (26, 44) gesteuert wird.

6. Verfahren nach einem der vorhergehenden Ansprüche, **dadurch gekennzeichnet, dass** die sicherheitsrelevante Funktion der Maschine abhängig von der Position, der Bewegungsrichtung und/oder der Bewegungsgeschwindigkeit (v) des Objektes (26) gesteuert wird.

7. Vorrichtung zum Steuern wenigstens einer sicherheitsrelevanten Funktion einer Maschine (12) mit einem Überwachungsbereich (18), in dem ein Objekt (24, 26) von wenigstens einem orts- und zeitauflösenden Sensor (14, 16, 22) überwachbar ist, mit einer Auswerteeinheit (28) zur Bestimmung von Position, Bewegungsrichtung und/oder Bewegungsgeschwindigkeit (v) des Objektes (26) aus den Sensorsignalen, mit Mitteln (47) zur Festlegung einer einen Gefahrenbereich (36) abgrenzenden Sicherheitsgrenze (32), die einen Sicherheitsabstand (S) zur Maschine (12) definiert und die Lage der Sicherheitsgrenze (32) in dem Überwachungsbereich (18) in Abhängigkeit von sowohl der Position als auch, der Bewegungsrichtung und/oder der Bewegungsgeschwindigkeit (v) des Objektes (26) variabel festlegbar ist und mit Signal- und/oder Schaltmitteln (46, 48) zum Auslösen der sicherheitsrelevanten Funktion nach Eindringen in den Gefahrenbereich (36).

8. Vorrichtung zum Steuern wenigstens einer sicherheitsrelevanten Funktion einer Maschine (12), insbesondere nach Anspruch 7, mit einem Überwachungsbereich (18), in dem ein Objekt (26) von wenigstens einem orts- und zeitauflösenden Sensor (14, 16, 22) überwachbar ist, mit einer Auswerteeinheit (28), zur Bestimmung von Position, Bewegungsrichtung und/oder Bewegungsgeschwindigkeit (v) des Objektes (26) aus den Sensorsignalen, mit Mitteln (47) zur Festlegung der Ausdehnung eines einen Gefahrenbereich (36) abgrenzenden Sicherheitsbereichs (38) in dem Überwachungsbereich (18) und eine Ausdehnung (A) des Sicherheitsbereichs (38) in Abhängigkeit von sowohl der Position als auch, der Bewegungsrichtung und/oder der Bewegungsgeschwindigkeit (v) des Objektes (26) variabel festlegbar ist und mit Signal- und/oder Schaltmitteln (46, 48) zum Auslösen der sicherheitsrelevanten Funktion nach Eindringen in den Gefahrenbereich (36).

9. Vorrichtung nach einem der vorhergehenden Ansprüche 7 oder 8, **dadurch gekennzeichnet, dass** die sicherheitsrelevante Funktion der Maschine (12) abhängig steuerbar ist von der Position, der Bewegungsrichtung und/oder der Bewegungsgeschwindigkeit (v) des Objektes (26).

10. Vorrichtung nach einem der vorhergehenden Ansprüche 7 bis 9, **dadurch gekennzeichnet, dass** wenigstens ein Objektklassifizierungsmittel (46) zum Klassifizieren des Objektes (26, 44) vorhanden ist.

11. Vorrichtung nach Anspruch 10, **dadurch gekennzeichnet, dass** die sicherheitsrelevante Funktion der Maschine in Abhängigkeit von der Klasse des Objektes (26, 44) steuerbar ist.

## Claims

1. Method of controlling at least one safety-specific function of a machine (12), in the case of which a monitoring region (18) is monitored by at least one location- and time-resolving sensor (14, 16, 22) and a position, a movement direction and/or a movement speed (v) of an object (24, 26) are detected and the monitoring region (18) comprises a safety boundary (32), which separates off a danger region (36) and defines a safe distance (S) from a danger zone of the machine (12), and penetration into the danger region (36) triggers the safety-specific function and the position of the safety boundary (32) can be established in a variable manner in dependence on both the position and the movement direction and/or movement speed (v) of the object.

2. Method according to Claim 1, **characterized in that** a speed at which the position of the safety boundary (32) is displaced is dependent on the position, the movement direction and/or the movement speed (v) of the object (24, 26).

3. Method of controlling at least one safety-specific function of the machine (12), in particular according to one of the preceding claims, in the case of which a monitoring region (18) is monitored by at least one location- and time-resolving sensor (14, 16, 22) and a position, a movement direction and/or a movement speed (v) of an object (24, 26) are detected and the monitoring region (18) comprises a safety region (38), which separates off a danger region (36), and penetration into the danger region (36) triggers the safety-specific function and an extent (A) of the safety region (38) is established in a variable manner in dependence on both the position and the movement direction and/or movement speed (v) of the object (24, 26).

4. Method according to one of the preceding claims, **characterized in that** the object (24, 26, 44) is classified by an object-classifying means (46).

5. Method according to Claim 4, **characterized in that** the safety-specific function of the machine is controlled in dependence on the class of the object (26, 44).

6. Method according to one of the preceding claims, **characterized in that** the safety-specific function of the machine is controlled in dependence on the position, the movement direction and/or the movement speed (v) of the object (26).

7. Apparatus for controlling at least one safety-specific function of a machine (12), having a monitoring region (18) in which an object (24, 26) can be monitored by at least one location- and time-resolving sensor (14, 16, 22), having an evaluating unit (28) for determining the position, movement direction and/or movement speed (v) of the object (26) from the sensor signals, having means (47) for establishing a safety boundary (32), which separates off a danger region (36) and defines a safe distance (S) from the machine (12), it being possible for the position of the safety boundary (32) in the monitoring region (18) to be established in a variable manner in dependence on both the position and the movement direction and/or the movement speed (v) of the object (26), and having signalling and/or switching means (46, 48) for triggering the safety-specific function following penetration into the danger region (36).

8. Apparatus for controlling at least one safety-specific function of a machine (12) in particular according to Claim 7, having a monitoring region (18) in which an object (26) can be monitored by at least one location- and time-resolving sensor (14, 16, 22), having an evaluating unit (28) for determining the position, movement direction and/or movement speed (v) of the object (26) from the sensor signals, having means (47) for establishing the extent of a safety region (38), which separates off a danger region (36), in the monitoring region (18), it being possible for an extent (A) of the safety region (38) to be established in a variable manner in dependence on both the position and the movement direction and/or the movement speed (v) of the object (26), and having signalling and/or switching means (46, 48) for triggering the safety-specific function following penetration into the danger region (36).

9. Apparatus according to one of the preceding Claims 7 or 8, **characterized in that** the safety-specific function of the machine (12) can be controlled in dependence on the position, the movement direction and/or the movement speed (v) of the object (26).

10. Apparatus according to one of the preceding Claims 7 to 9, **characterized in that** at least one object-classifying means (46) is provided for classifying the object (26, 44).

11. Apparatus according to Claim 10, **characterized in that** the safety-specific function of the machine can be controlled in dependence on the class of the object (26, 44).

## Revendications

1. Procédé de commande d'au moins une fonction relative à la sécurité d'une machine (12) dans lequel une zone à surveiller (18) est surveillée par au moins un capteur (14, 16, 22) analysant l'espace et le temps ; la position, le sens de déplacement et/ou la vitesse de déplacement (v) d'un objet (24, 26) sont reconnus ; la zone à surveiller (18) comprend une limite de sécurité (32) délimitant une zone de danger (36) et définissant une distance de sécurité (S) par rapport à un endroit dangereux de la machine (12) ; une pénétration dans la zone de danger (36) déclenche la fonction relative à la sécurité ; et dans lequel la situation de la limite de sécurité (32) peut être établie de manière variable non seulement en fonction de la position mais encore du sens de déplacement et/ou de la vitesse de déplacement (v) de l'objet.

2. Procédé selon la revendication 1, **caractérisé en ce que** la vitesse avec laquelle la situation de la limite de sécurité (32) est déplacée est fonction de la position, du sens de déplacement et/ou de la vitesse de déplacement (v) de l'objet (24, 26).

3. Procédé de commande d'au moins une fonction relative à la sécurité d'une machine (12), notamment selon l'une des revendications précédentes, dans lequel la zone à surveiller (18) est surveillée par au moins un capteur analysant l'espace et le temps (14, 16, 22); la position, le sens de déplacement et/ou la vitesse de déplacement (v) d'un objet (24, 26) sont reconnus ; la zone à surveiller (18) comprend une zone de sécurité (38) délimitant une zone de danger (36) ; une pénétration dans la zone de danger (36) déclenche la fonction relative à la sécurité ; et dans lequel une extension (A) de la zone de sécurité (38) peut être établie de manière variable non seulement en fonction de la position mais encore du sens de déplacement et/ou de la vitesse de déplacement (v) de l'objet (24, 26).

4. Procédé selon l'une des revendications précédentes, **caractérisé en ce que** l'objet (24, 26, 44) est classifié à l'aide d'un moyen de classification d'objet (46).

5. Procédé selon la revendication 4, **caractérisé en ce que** la fonction relative à la sécurité de la machine est commandée en fonction de la classe de l'objet (26, 44).

6. Procédé selon l'une des revendications précédentes, **caractérisé en ce que** la fonction relative à la sécurité de la machine est commandée en fonction de la position, du sens de déplacement et/ou de la vitesse de déplacement (v) de l'objet (26).

7. Dispositif de commande d'au moins une fonction relative à la sécurité d'une machine (12) comportant une zone à surveiller (18) dans laquelle un objet (24, 26) peut être surveillé par au moins un capteur analysant l'espace et le temps (14, 16, 22), une unité de traitement (28) servant à déterminer la position, le sens de déplacement et/ou la vitesse de déplacement (v) de l'objet (26) à partir des signaux de capteur, des moyens (47) servant à établir une limite de sécurité (32) délimitant une zone de danger (36) et définissant une distance de sécurité (S) par rapport à la machine (12), la situation de la limite de sécurité (32) dans la zone à surveiller (18) pouvant être fixée de manière variable non seulement en fonction de la position mais encore du sens de déplacement et/ou de la vitesse de déplacement (v) de l'objet (26) ; et des moyens de signalisation et/ou de commutation (46, 48) servant à déclencher la fonction relative à la sécurité après pénétration dans la zone de danger (36).

8. Dispositif de commande d'au moins une fonction relative à la sécurité d'une machine (12), notamment selon la revendication 7, comportant une zone à surveiller (18) dans laquelle un objet (26) peut être surveillé par au moins un capteur analysant l'espace et le temps (14, 16, 22), une unité de traitement (28) servant à déterminer la position, le sens de déplacement et/ou la vitesse de déplacement (v) de l'objet (26) à partir des signaux de capteur, des moyens (47) servant à établir, dans la zone à surveiller (18), l'extension d'une zone de sécurité (38) délimitant une zone de danger (36), une extension (A) de la zone de sécurité (38) pouvant être établie de manière variable non seulement en fonction de la position mais encore du sens de déplacement et/ou de la vitesse de déplacement (v) de l'objet (26) ; et des moyens de signalisation et/ou de commutation (46, 48) servant à déclencher la fonction relative à la sécurité après pénétration dans la zone de danger (36).

9. Dispositif selon l'une des revendications précédentes 7 et 8, **caractérisé en ce que** la fonction relative à la sécurité de la machine (12) peut être commandée en fonction de la position, du sens de déplacement et/ou de la vitesse de déplacement (v) de l'objet (26).

10. Dispositif selon l'une des revendications précédentes 7 à 9, **caractérisé en ce qu'**il existe au moins un moyen de classification d'objet (46) servant à classifier l'objet (26, 44).

11. Dispositif selon la revendication 10, **caractérisé en ce que** la fonction relative à la sécurité de la machine peut être commandée en fonction de la classe de l'objet (26, 44).
